# EUROPEAN PATENT APPLICATION

(11) **EP 2 204 251 A1**
(43) Date of publication of application: **07.07.2010**
(21) Application number: 08022591.5
(22) Date of filing: 31.12.2008
(51) Int. Cl.: B23B 27/06, B23B 27/16, B23B 29/24

(54) **Tool holder for a cutting tool and cutting tool**

(71) Applicant: VARGUS Ltd., 22311 Nahariya (IL)
(72) Inventor: Morgulis, Rafael, 21940 Carmiel (IL)
(74) Representative: Patentanwälte Ruff, Wilhelm, Beier, Dauster & Partner

(57) **Abstract**

The invention relates to a cutting tool and a tool holder therefore, the tool holder having a first mounting pocket (23) formed therein adapted for exchangeably receiving a first cutting insert (3) with at least one first cutting edge (30), wherein a second mounting pocket (24) is formed in the tool holder (2) adapted for receiving a second cutting insert (4) with at least one second cutting edge (40), and wherein the first cutting edge (30) and the second cutting edge (40) may be arranged in series for providing a multi-tooth cutting edge.

## Description

The invention generally relates to a tool holder for cutting tools and a cutting tool. More specifically the invention relates to a tool holder and a cutting tool for forming threads in a workpiece, in particular for oil-related industry productions.

Cutting tools or tool bits comprising a tool holder and an insert therefore are well known and used for all kinds of purposes. The form of the cutting insert and/or the type of fixing means for securing the insert on the tool holder depend on the intended use. In particular when used in the oil-related industry, the requirements are very high and complex thread forms are necessary.

It is known in the prior art, to provide inserts for the oil-related industry which are secured to a tool holder with two screws.

It is the object of the invention to provide a tool holder for a cutting tool, in particular for a cutting tool for producing a thread by turning, with a high productivity and a long tool life. It is another object of the invention to provide a cutting tool, in particular a cutting tool for producing a thread by turning, with a high productivity and a long tool life.

This object is solved by tool holder having a first mounting pocket formed therein adapted for exchangeably receiving a first cutting insert with at least one first cutting edge, wherein a second mounting pocket is formed in the tool holder adapted for receiving a second cutting insert with at least one second cutting edge, and when securing the first and the second insert to the tool holder the first cutting edge and the second cutting edge may be arranged in series for providing a multi-tooth cutting edge.

Appropriate inserts may be received in the mounting pockets and arranged to present their cutting edges. Providing a second mounting pocket allows the simultaneous use of two inserts. Thereby, a longer cutting edge may be provided while keeping the manufacturing costs of each insert low. The two inserts may be exchanged independently, thereby allowing a long use of each cutting edge. In one embodiment, more than two mounting pockets may be provided.

According to a preferred embodiment, the first mounting pocket and the second mounting pocket are connected to form one mounting pocket. The two cutting inserts may abut each other when retained in the mounting pocket for providing a long cutting edge without any or only with a marginal gap in between.

Preferably, at least one clamping mechanism is provided, more preferably two clamping mechanism are provided for securing the first and the second cutting insert to the tool holder. The clamping mechanism may each comprise at least one screw for exchangeably fixing the insert(s) in the mounting pockets.

In another embodiment the first mounting pocket and/or the second mounting pocket are provided with at least one bearing surface for the first cutting insert and the second cutting insert, respectively. The bearing surfaces enhance a positioning of the inserts in the pocket.

In another embodiment, the tool holder comprises a shank and a forward protrusion in which the first mounting pocket and the second mounting pocket are formed. The pockets are formed at a peripheral surface. In one embodiment the pocket opens in the direction of a front face of the protrusion. In other embodiments the pocket opens to a side of the protrusion. The protrusion may have an inclined top surface in which the mounting pocket is provided for providing a back rake angle.

The object is also solved by a cutting tool comprising a tool holder with two mounting pockets, a first cutting insert and a second cutting insert. The two cutting inserts are retained in the two mounting pockets, respectively. Preferably, the two mounting pockets are combined allowing the inserts to be fixed in the pockets for providing one conjoint gapless cutting edge. Each inserts has at least one cutting tooth.

In one embodiment, the first cutting insert and the second cutting insert differ in the geometry of the cutting edge, the preparation of the cutting edge and/or a coating of the cutting edge. The two inserts may serve different purposes. Preferably, the second cutting insert is provided with a finishing cutting edge. A finishing cutting tooth of the second cutting insert has a width that is narrower than the wide of a tooth of the first insert.

In another embodiment, the first cutting insert and/or the second cutting insert have a triangular shape with at least three cutting edges.

In the following, an embodiment of the invention will be described in detail based on several schematic drawings in which:
- Fig. 1:: is a perspective view of cutting tool in accordance with the invention;
- Fig. 2:: is an explosive view of the cutting tool of Fig. 1 and
- Fig. 3:: is an increased topside view of detail III of the cutting tool of Fig. 1.

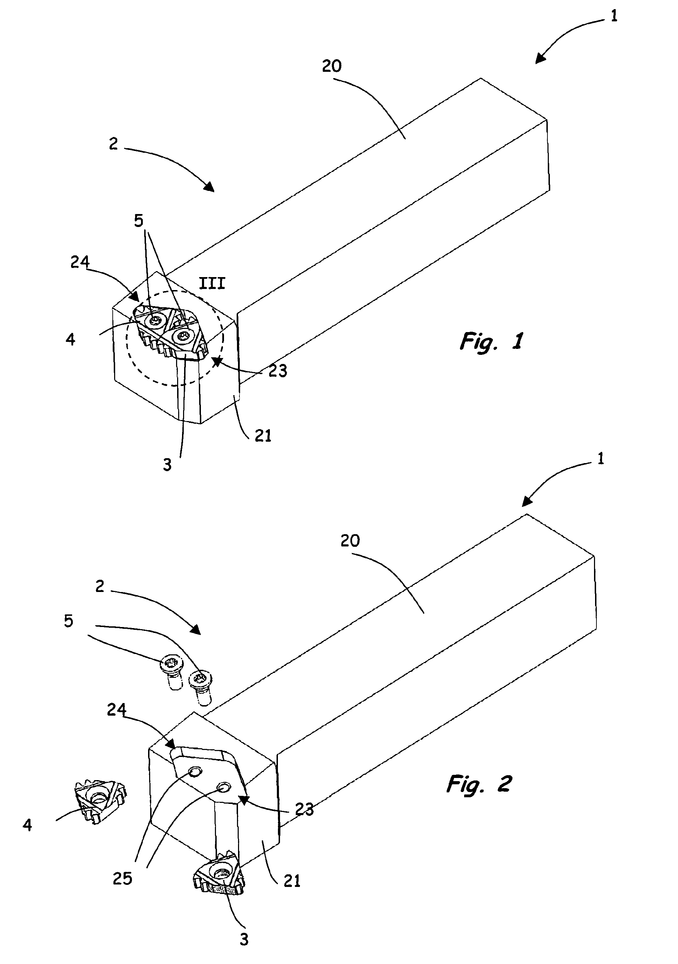

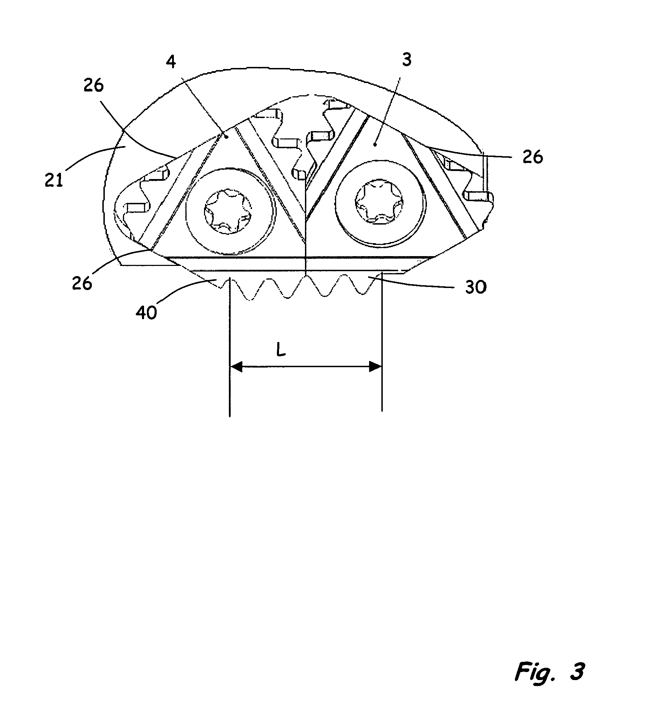

Fig. 1 is a schematic perspective view and fig. 2 is an explosive view of a cutting tool 1 in accordance with the invention. Fig. 3 is an increased topside view of detail III of the cutting tool 1 of fig. 1. The cutting tool 1 comprises a tool holder 2, a first cutting insert 3 and a second cutting insert 4.

The tool holder 2 has a shank 20 and a forward protrusion 21. In the forward protrusion 21 a first mounting pocket 23 and a second mounting pocket 24 are formed, which are in the depicted embodiment connected to form one mounting pocket. The mounting pockets 23, 24 are adapted in size and shape to receive the first cutting insert 3 and the second cutting insert 4, respectively. The cutting inserts 3, 4 are secured to the tool holder 2 by a clamping mechanism each. The clamping mechanisms each comprise a screw 5, wherein the mounting pocket 23, 24 are provided with two screw holes 25 (visible in fig. 2) for receiving the two screws 5.

The tool cutting inserts 3, 4 both have a triangle shape with three cutting edges 30, 40. In the depicted embodiment, both cutting inserts 3, 4 are multi-tooth inserts having a plurality of cutting teeth on each cutting edge 30, 40. In other embodiments, one or both cutting inserts may be formed as single-tooth inserts having only on cutting tooth on each cutting edge. Both cutting edges 30, 40 may be produced with a specific geometry, a specific edge preparation and/or a specific coating. Preferably, the first cutting insert 3 is provided with a cutting edge 30 for roughing and the second cutting insert 4 is provided with a cutting edge 40 for finishing. In particular, cutting edges 30, 40 may be provided so as to fulfil the requirement of the oil-related industry - for example laid out by the American Petroleum Institute (API Standard).

As may be best seen in the enlarged top side view of fig. 3, the two cutting inserts 3, 4 are placed in the mounting pockets 23, 24 so that cutting edges 30, 40 in use are presented on a front face and arranged in series for providing a long multi-tooth cutting edge with a length L. This longer multi-tooth cutting edge with a bigger number of cutting teeth allows to cut a thread with less number of passes compared to cutting edges having less teeth. Thereby the productivity of the process is increased. When one of the cutting edges becomes blunt, the respective insert may be indexed to a different position or eventually be replaced. In the depicted embodiment, the mounting pockets 23, 24 open to a front face of the tool holder 2. The inserts are secured to the mounting pockets, wherein the cutting edges 30, 40 are presented on a front face of the tool holder 2. The cutting edge 40 of the second cutting insert 4 protrudes slightly further that the cutting edge 30 of the first insert 3.

The mounting pockets 23, 24 are adapted to receive the inserts 3, 4 and are provided with bearing surfaces 26. The bearing surfaces 26 allow a reliable and repeatable positioning of the inserts 3, 4. In the depicted embodiment, the two mounting pockets 23, 24 are arranged to allow the inserts 3, 4 to rest on one another on surfaces adjacent to the cutting edges 30, 40. Thereby a rigidity may be enhanced.

## Claims

1. Tool holder having a first mounting pocket (23) formed therein adapted for exchangeably receiving a first cutting insert (3) with at least one first cutting edge (30), **characterized in that** a second mounting pocket (24) is formed in the tool holder (2) adapted for receiving a second cutting insert (4) with at least one second cutting edge (40), wherein the first cutting edge (30) and the second cutting edge (40) may be arranged in series for providing a multi-tooth cutting edge.

2. Tool holder according to claim 1, **characterized in that** the first mounting pocket (23) and the second mounting pocket (24) are connected to form one mounting pocket.

3. Tool holder according to claim 2, **characterized in that** at least one clamping mechanism, preferably two clamping mechanism is/are provided for securing the first and the second cutting insert (3, 4) to the tool holder (2).

4. Tool holder according to any of claims 1, 2 or 3, **characterized in that** the first mounting pocket (23) and/or the second mounting pocket (24) are provided with at least one bearing surface (26) for the first cutting insert (3) and the second cutting insert (4), respectively.

5. Tool holder according to any of claims 1 to 4, **characterized in that** the tool holder comprises a shank (20) and a forward protrusion (21) in which the first mounting pocket (23) and the second mounting pocket (24) are formed.

6. Cutting tool comprising a tool holder (2) according to any of claims 1 to 5, a first cutting insert (3) and a second cutting insert (4).

7. Cutting tool according to claim 6, **characterized in that** the first cutting insert (3) and the second cutting insert (4) differ in a geometry of the cutting edge (30, 40), a preparation of the cutting edge (30, 40) and/or a coating of the cutting edge (30, 40).

8. Cutting tool according to claim 6 or 7, **characterized in that** the second cutting insert (4) is provided with a finishing cutting edge (40).

9. Cutting tool according to claim 6, 7 or 8, **characterized in that** the first cutting insert (3) and/or the second cutting insert (4) have a triangular shape with at least three cutting edges (30, 40).
